(19) Europäisches Patentamt
European Patent Office
Office européen des brevets

(11) **EP 3 748 196 A1**

(12) **EUROPÄISCHE PATENTANMELDUNG**

(43) Veröffentlichungstag:
**09.12.2020 Patentblatt 2020/50**

(51) Int Cl.:
**F16H 25/20** *(2006.01)* **F16H 25/24** *(2006.01)*

(21) Anmeldenummer: **20167964.4**

(22) Anmeldetag: **03.04.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **07.06.2019 DE 102019115501**

(71) Anmelder: **Precitec GmbH & Co. KG**
**76571 Gaggenau-Bad Rotenfels (DE)**

(72) Erfinder: **Schubert, Peter**
**76571 Gaggenau (DE)**

(74) Vertreter: **Ter Meer Steinmeister & Partner**
**Patentanwälte mbB**
**Nymphenburger Straße 4**
**80335 München (DE)**

(54) **SPINDEL FÜR EINEN GEWINDETRIEB UND GEWINDETRIEB MIT DEMSELBEN**

(57) Es ist eine Spindel für einen Gewindetrieb offenbart, wobei die Spindel umfasst: einen ersten Spindelteil mit einem ersten Gewindeteil und einen zweiten Spindelteil mit einem zweiten Gewindeteil, wobei der erste Gewindeteil und der zweite Gewindeteil zusammen ein Gewinde der Spindel bilden, und ein Fixiermittel, wobei der erste Spindelteil und der zweite Spindelteil derart ausgebildet sind, dass ein Abstand zwischen dem ersten Spindelteil und dem zweiten Spindelteil entlang der Drehachse der Spindel zum Einstellen eines Versatzes zwischen dem ersten Gewindeteil und dem zweiten Gewindeteil einstellbar ist, wobei das Fixiermittel eingerichtet ist, den ersten Spindelteil und den zweiten Spindelteil mit dem eingestellten Abstand aneinander zu fixieren. Ferner sind ein Gewindetrieb mit einer solchen Spindel und einer Spindelmutter und eine Stellvorrichtung mit einem solchen Gewindetrieb offenbart.

Fig. 2

## Beschreibung

### Technisches Gebiet

Die vorliegende Erfindung betrifft eine Spindel für einen Gewindetrieb. Die Erfindung betrifft ferner einen Gewindetrieb mit einer solchen Spindel. Die Erfindung betrifft außerdem eine Stellvorrichtung zum Verfahren eines beweglichen Teils umfassend einen solchen Gewindetrieb.

### Hintergrund

Gewindetriebe oder Gewindespindeln sind Elemente, die eine Drehbewegung, beispielsweise von einer Welle eines Motors, in eine Linearbewegung umsetzen. Gewindetriebe werden insbesondere als Verstellglied für Linearantriebe verwendet, die eine besonders hohe Positioniergenauigkeit aufweisen müssen. Gewindetriebe weisen für gewöhnlich eine Spindel und eine Spindelmutter auf. Die Spindel kann auch als Bolzen bezeichnet werden. Die Spindelmutter kann auch als Gewindemutter bezeichnet werden.

Die Spindelmutter dient zur Befestigung eines linear anzutreibenden Gegenstandes, wie beispielsweise eines Schlittens oder eines Bocks. Eine Anwendung liegt beispielsweise im Bereich von Optiken, insbesondere Fokussieroptiken, für Laserbearbeitungssysteme, die präzise bewegt werden müssen. Aufgrund von Fertigungstoleranzen und leichtgängiger Betätigbarkeit des Gewindetriebs ist jedoch für gewöhnlich ein Spiel zwischen der Spindel des Gewindetriebs und der Spindelmutter vorhanden. Insbesondere beim Wechsel der Antriebsrichtung kann daher die Spindelmutter der Spindelbewegung nicht unmittelbar folgen, da das Spiel eine gewisse Leerbewegung der Spindel gegenüber der Spindelmutter bedingt. Vor allem bei Anwendungen, die eine hohe Genauigkeit erfordern, ist das Gewindespiel, und insbesondere das Umkehrspiel bei Drehrichtungswechsel, unerwünscht.

Um dieses Spiel soweit wie möglich zu kompensieren, umfasst die Spindelmutter bei Gewindetrieben des Stands der Technik zwei Teile, in die die Spindel eingesetzt ist. Die Kompensation des Gewindespiels erfolgt durch Verspannen dieser zwei Teile auf der Spindel mittels eines Federelements.

EP 1 057 960 B1 und DE 10 208 064 129 B3 zeigen solche Gewindetriebe mit zweigeteilten Spindelmuttern.

Die bekannten Gewindetriebe haben den Nachteil, dass die elastische Verformbarkeit des Federelements Einfluss auf die Dynamikeigenschaften der Stellvorrichtung hat. Beim Wechsel der Antriebsrichtung folgt die Spindelmutter der Spindelbewegung nicht unmittelbar, da das Federelement zunächst gestaucht oder gedehnt werden muss. Dadurch werden insbesondere Beschleunigungskräfte, die durch die Spindel auf die Spindelmutter übertragen werden, gedämpft. Dieses Verhalten des Gewindetriebs wird auch als "Dynamik" bezeichnet.

Eine hohe Dynamik des Gewindetriebs bedeutet dabei, dass die Spindelmutter des Gewindetriebs einer Umkehrung der Bewegungsrichtung schnell folgen kann. Eine hohe Dynamik kann bei Gewindetrieben des Stands der Technik durch ein Federelement mit einer großen Federkonstante oder einer hohen Federkraft erreicht werden. Die Federkraft hat also einen entscheidenden Einfluss auf die Dynamik des Gewindetriebs.

Dies hat den Nachteil, dass durch eine von dem Federelement bereitgestellte hohe Federkraft hohe Reibungskräfte zwischen dem Gewinde der Spindel und dem Gewinde der Spindelmutter, insbesondere an den Gewindeflanken, hervorgerufen werden. Höhere Reibungskräfte führen jedoch zu einem erhöhten Verschleiß der Gewinde.

### Zusammenfassung der Erfindung

Es ist deshalb eine Aufgabe der Erfindung, einen Gewindetrieb bereitzustellen, der ein Umkehrspiel verhindert und einen Verschleiß der Gewinde verringert oder verhindert.

Die Aufgabe wird durch eine Spindel für einen Gewindetrieb gemäß Anspruch 1 gelöst, sowie durch einen Gewindetrieb gemäß Anspruch 11 umfassend die erfindungsgemäße Spindel und eine entsprechende Spindelmutter, und durch eine Stellvorrichtung zum Verfahren eines beweglichen Elements gemäß Anspruch 13 umfassend den erfindungsgemäßen Gewindetrieb. Vorteilhafte Ausführungsformen und Weiterentwicklungen sind Gegenstand abhängiger Ansprüche.

Die erfindungsgemäße Spindel umfasst einen ersten Spindelteil mit einem ersten Gewindeteil und einen zweiten Spindelteil mit einem zweiten Gewindeteil, wobei der erste Gewindeteil und der zweite Gewindeteil zusammen ein Gewinde der Spindel bilden. Der erste Spindelteil und der zweite Spindelteil sind derart ausgebildet, dass ein Abstand zwischen dem ersten Spindelteil und dem zweiten Spindelteil entlang der Drehachse der Spindel einstellbar ist, um einen Versatz zwischen dem ersten Gewindeteil und dem zweiten Gewindeteil zur Kompensation eines Gewindespiels einzustellen. Ferner umfasst die Spindel ein Fixiermittel. Das Fixiermittel ist eingerichtet, den ersten Spindelteil und den zweiten Spindelteil mit dem eingestellten Abstand aneinander zu fixieren. Durch den Versatz zwischen den beiden Gewindeteilen kann das Gewindespiel eingestellt bzw. kompensiert werden. Der Versatz kann als die Strecke definiert werden, um die der Gewindegang des einen Gewindeteils bezüglich eines gedanklich parallel zur Drehachse fortgeführten Gewindegangs des anderen Gewindeteils verschoben ist.

Der Erfindung liegt die Idee zugrunde, die Spindel zweiteilig auszubilden. Wenn die Spindel in das Gewinde der Spindelmutter eingesetzt ist, kann durch das Einstellen und Fixieren des Abstands der beiden Spindelteile ein Versatz zwischen den Gewindegängen der beiden Gewindeteile so eingestellt werden, dass ein Gewindespiel kompensiert wird. Das Fixiermittel dient dazu, den ersten Spindelteil und den zweiten Spindelteil mit dem eingestellten Abstand aneinander zu fixieren. Im Gegensatz zum Stand der Technik wird der spielfreie Zustand des Gewindetriebs nicht durch ein Federelement oder ein elastisches Element aufrechterhalten, sondern durch das Fixierelement, das die beiden Spindelteile im eingestellten Abstand aneinander fixiert. Somit kann eine große Dynamik des Gewindetriebs ohne erhöhten Verschleiß erzielt werden.

Die Spindelmutter des Gewindetriebs kann einteilig ausgebildet sein. In diesem Fall kann die Spindelmutter genau ein Gewinde mit einem durchgängigen Gewindegang zur Führung der zweiteiligen Spindel aufweisen.

Die Spindel weist also einen ersten Spindelteil mit einem ersten Gewinde und einen zweiten Spindelteil mit einem zweiten Gewinde auf. Vorzugsweise sind der erste Spindelteil und der zweite Spindelteil koaxial angeordnet. Der erste Spindelteil kann auch als äußerer Spindelteil, der zweite Spindelteil kann auch als eingesetzter oder innerer Spindelteil bezeichnet werden. Vorzugsweise sind der erste Spindelteil und der zweite Spindelteil relativ zueinander um die Drehachse der Spindel frei drehbar und/oder frei verschiebbar. Die Drehachse kann auch als Längsachse oder Zylinderachse der Spindel bezeichnet werden. Die Drehachse ist parallel zur Längsrichtung der Spindel. Die Drehachse der Spindel ist die Achse, um die sich die Spindel dreht, wenn sie in der Spindelmutter des Gewindetriebs bewegt bzw. gedreht wird.

Vorzugsweise weisen die beiden Spindelteile jeweils einen Gewindebereich auf, an dem der jeweilige Gewindeteil ausgebildet ist. Der jeweilige Gewindebereich ist vorzugsweise zylinderförmig ausgebildet. Der erste Gewindeteil kann also an einem Gewindebereich des ersten Spindelteils angeordnet sein und der zweite Gewindeteil kann an einem Gewindebereich des zweiten Spindelteils angeordnet sein. Zusammen bilden die beiden Gewindeteile das Gewinde der Spindel. Die beiden Gewindeteile weisen dieselbe Steigung oder Gewindeganghöhe auf. Der Gewindebereich des ersten Spindelteils und der Gewindebereich des zweiten Spindelteils können denselben Umfang aufweisen.

Der erste Spindelteil und der zweite Spindelteil sind derart ausgebildet, dass ein Abstand zwischen dem ersten Gewindeteil und dem zweiten Gewindeteil beliebig oder kontinuierlich einstellbar ist. Dadurch, dass ein Abstand zwischen den beiden Gewindeteilen beliebig einstellbar ist, ist auch der Versatz zwischen den Gewindegängen der beiden Gewindeteile beliebig oder kontinuierlich einstellbar. Dadurch ist es möglich, eine Spielfreiheit des Gewindetriebs, in dem die Spindel verwendet wird, einzustellen bzw. den Versatz zu kompensieren.

Die Herstellung der Spielfreiheit, d.h. die Kompensierung des Gewindespiels, kann durch Ausübung einer Zug- oder Druckkraft auf die beiden Spindelteile erfolgen, wenn die erfindungsgemäße Spindel in die Spindelmutter des Gewindetriebs eingesetzt ist. Durch die Kraft werden beim Einstellen der Spielfreiheit die beiden Spindelteile im Gewinde der Spindelmutter im Rahmen des Gewindespiels entsprechend aufeinander zubewegt oder voneinander wegbewegt. Infolgedessen vergrößert oder verkleinert sich der Abstand der eingesetzten Spindelteile. Damit einhergehend vergrößert oder verkleinert sich ebenfalls der Versatz zwischen den Gewindegängen der beiden Gewindeteile, bis der Versatz so groß wie das Spiel zwischen dem Gewinde der Spindel und dem Gewinde der Spindelmutter des Gewindetrieb ist. Somit kann das Spiel des Gewindetriebs durch den Versatz zwischen den Gewindegängen der beiden Gewindegänge kompensiert bzw. ausgeglichen oder zumindest verringert werden. Mit anderen Worten wird dadurch die Spielfreiheit des Gewindetriebs hergestellt oder eingestellt.

Das Fixiermittel dient dazu, den ersten Spindelteil und den zweiten Spindelteil nach Einstellung des gewünschten Abstands bzw. Versatzes aneinander zu fixieren. Die Fixierung erfolgt also in dem vorstehend beschriebenen Zustand, in dem die Spielfreiheit des Gewindespiels eingestellt ist. Durch das Fixierelement kann eine Relativbewegung der beiden Spindelteile zueinander verhindert und die Spielfreiheit des Gewindetriebs erhalten werden. Mit anderen Worten kann das Fixierelement eine Relativposition des ersten Spindelteils und des zweiten Spindelteils zueinander fixieren. Die Relativposition der beiden Spindelteile zueinander entspricht dem eingestellten Versatz der Gewindegänge bzw. dem eingestellten Abstand der beiden Gewindeteile. Dadurch kann also die Einstellung des Abstands und der Zustand der Spielfreiheit dauerhaft und statisch beibehalten werden.

Während des Betriebs werden die Dynamikeigenschaften des Gewindetriebs somit im Gegensatz zum Stand der Technik nicht durch eine Feder bzw. deren Federkraft oder Federkonstante beeinflusst. Durch Fixieren mittels des Fixierelements bleibt die Einstellung immer statisch und unterliegt keinen Schwankungen bei unterschiedlichen dynamischen Bedingungen, beispielsweise beim Umkehren der Bewegungsrichtung des Gewindetriebs. Dadurch wird eine hohe Dynamik ohne hohe Federkräfte möglich. Folglich ist zum Erreichen und Erhalten der Spielfreiheit eine sehr geringe Reibungskraft im Vergleich zum Stand der Technik erforderlich. Der Verschleiß kann dadurch minimiert werden.

Vorzugsweise ist der zweite Spindelteil teilweise, insbesondere nur teilweise, in den ersten Spindelteil eingesetzt. Gemäß einer bevorzugten Ausführungsform weist der erste Spindelteil eine Längsaussparung auf und der zweite Spindelteil weist einen Steckbolzen auf. Der Steckbolzen kann in die Längsaussparung eingesetzt sein und kann darin frei verschiebbar sein. Der Steckbolzen kann einteilig mit dem Gewindebereich des zweiten Spindelteils ausgebildet sein. Die Längsaussparung ist vorzugsweise entlang der Längsachse des ersten Spindelteils ausgebildet. Der Steckbolzen ist vorzugsweise entlang der Längsachse des zweiten Spindelteils ausgebildet. Wenn das zweite Spindelteil in das erste Spindelteil eingesetzt ist, sind die Längsaussparung und der Steckbolzen vorzugsweise zueinander koaxial angeordnet und/oder sind vorzugsweise koaxial zur Längsachse der Spindel ausgebildet. Mittels der Längsaussparung am ersten Spindelteil und dem Steckbolzen am zweiten Spindelteil ist eine koaxiale Führung der beiden Spindelteile beim Einstellen möglich.

Das Fixiermittel kann ein Fixierelement, z.B. eine Schraube, umfassen. Alternativ kann das Fixiermittel Klebstoff umfassen, um die beiden Spindelteile mittels des Klebstoffs miteinander zu verkleben.

Vorzugsweise ist das Fixiermittel am ersten Spindelteil angeordnet, besonders bevorzugt an einem Umfangsbereich des ersten Spindelteils, der an den eingesetzten zweiten Spindelteil angrenzt. Dadurch kann der zweite Spindelteil am ersten Spindelteil fixiert oder befestigt werden, und zwar in einem Zustand, in dem der zweite Spindelteil in den ersten Spindelteil eingesetzt ist. Der Umfangsbereich kann zylinderförmig sein. Der Umfangsbereich des ersten Spindelteils kann den Gewindebereich aufweisen, an dem der erste Gewindeteil ausgebildet ist. Der Umfangsbereich kann auch einen gewindefreien Bereich aufweisen.

Vorzugsweise ist ein Loch im Umfangsbereich des ersten Spindelteils ausgebildet, in das das Fixiermittel einsetzbar bzw. eingesetzt ist, um in Kontakt mit dem eingesetzten zweiten Spindelteil zu treten. Mit anderen Worten kann das Fixiermittel den Umfangsbereich des ersten Spindelteils durchdringen. Das Loch ist vorzugsweise in einen gewindefreien Bereich des Umfangsbereichs des ersten Spindelteils ausgebildet. Das Loch steht vorzugsweise mit der Längsaussparung in Verbindung.

Gemäß einer besonders bevorzugten Ausführungsform ist das Fixiermittel als Schraube ausgebildet und das Loch weist ein Innengewinde auf. Vorzugsweise ist das Loch in radialer Richtung der Spindel, d.h. senkrecht zur Drehachse, ausgebildet. Die Schraube kann also mit dem Innengewinde des Lochs zusammenwirken, um das zweite Spindelteil am ersten Spindelteil zu fixieren. Die Schraube kann dazu eingerichtet sein, den Steckbolzen des zweiten Spindelteils in der Längsaussparung des ersten Spindelteils zu verklemmen. Dadurch können das erste Spindelteil und das zweite Spindelteil aneinander fixiert werden.

Vorzugsweise ist das Fixiermittel derart angeordnet, sodass es zugänglich ist in einem Zustand, bei dem die Spindel in die Spindelmutter des Gewindetriebs eingesetzt ist. Dadurch ist es einfach möglich, die Spielfreiheit erneut einzustellen. Dies ist beispielsweise erwünscht, wenn sich das Gewindespiel eines Gewindetriebs, in dem die erfindungsgemäße Spindel verwendet wird, nach einer erstmaligen Einstellung des Gewindespiels verändert, beispielsweise aufgrund von Verschleiß des Gewindes der Spindel und/oder des Gewindes der Spindelmutter.

Vorzugsweise ist das Fixiermittel am ersten Spindelteil angeordnet und übt eine Klemmkraft auf den zweiten Spindelteil aus, um die beiden Spindelteile aneinander zu fixieren. Dadurch kann effektiv verhindert werden, dass sich die beiden Spindelteile relativ zueinander bewegen, während eine flexible Einstellbarkeit gewährleistet ist. Die Klemmkraft führt zu einer hohen Haftreibung zwischen den beiden Spindelteilen. Durch die Klemmkraft wird also ein Kraftschluss oder ein Reibschluss, d.h. eine kraftschlüssige Verbindung zwischen den beiden Spindelteilen ausgebildet. Das Fixierelement kann als Klemmelement bezeichnet werden.

Das Fixierelement kann auch als Klemmring ausgebildet sein. Der Klemmring kann den Umfangsbereich des ersten Spindelteils umgeben und mit dem zweiten Spindelteil in Kontakt stehen. Dadurch kann der Klemmring eine Klemmkraft auf den zweiten Spindelteil ausüben.

Gemäß einer bevorzugten Ausführungsform umfasst die erfindungsgemäße Spindel ferner ein elastisches Element. Das elastische Element kann zwischen dem ersten Spindelteil und dem zweiten Spindelteil angeordnet sein. Das elastische Element ist vorzugsweise dazu eingerichtet, eine Federkraft auf den ersten Spindelteil und/oder den zweiten Spindelteil entlang der Drehachse der Spindel auszuüben. Die Federkraft kann eine Zugkraft oder eine Druckkraft sein. Als elastisches Element kann jede geeignete Art von Federelement verwendet werden, das eingerichtet ist, eine Zugkraft oder eine Druckkraft auszuüben. Das elastische Element kann beispielsweise als Ringfeder, Blattfeder, Evolutfeder, Tellerfeder, Wellenfeder oder Spiralfeder ausgebildet sein. Das elastische Element ist vorzugsweise so zwischen den beiden Spindelteilen angeordnet, dass es eine Kraft in Längsrichtung der Spindel auf die beiden Spindelteile ausüben kann.

Vorzugsweise ist das elastische Element gespannt, wenn das zweite Spindelteil in das erste Spindelteil eingesetzt bzw. darin fixiert ist. Mit anderen Worten übt das elastische Element eine Zug- oder Druckkraft auf das erste Spindelelement und/oder das zweite Spindelelement aus. Beispielsweise kann ein elastisches Element, das an beiden Spindelteilen befestigt ist, eine Zugkraft auf beide Spindelteile ausüben. Die beiden Spindelteile werden also zueinander gezogen. Beim Einschrauben der Spindel in ein Gewinde einer Spindelmutter wird das elastische Element dann soweit gedehnt, bis ein (minimaler) Versatz zur Kompensierung des Gewindespiels eingestellt ist. Als (minimaler) Versatz kann der Abstand zwischen den Spindelteilen so eingestellt sein, dass die Gewindeflanken des ersten Gewindeteils auf der dem zweiten Gewindeteil zugewandten Seite an dem Gewinde der Spindelmutter anliegen. Entsprechend liegen hierbei die Gewindeflanken des zweiten Gewindeteils auf der dem ersten Gewindeteil zugewandten Seite an dem Gewinde der Spindelmutter an. Alternativ kann ein elastisches Element zwischen den beiden Spindelteilen so angeordnet sein, dass das elastische Element eine Druckkraft auf beide Spindelteile ausübt. Die beiden Spindelteile werden in diesem Fall auseinander gedrückt. Beim Einschrauben der Spindel in ein Gewinde einer Spindelmutter wird das elastische Element dann soweit gestaucht, bis ein (maximaler) Versatz zur Kompensierung des Gewindespiels eingestellt ist. Als (maximaler) Versatz kann der Abstand zwischen den Spindelteilen so eingestellt sein, dass die Gewindeflanken des ersten Gewindeteils auf der dem zweiten Gewindeteil abgewandten Seite an dem Gewinde der Spindelmutter anliegen. Entsprechend liegen hierbei die Gewindeflanken des zweiten Gewindeteils auf der dem ersten Gewindeteil abgewandten Seite an dem Gewinde der Spindelmutter an.

Das elastische Element kann dazu dienen, beim vorstehend beschriebenen Einstellen des Gewindespiels die Zug- oder Druckkraft auf die beiden Spindelteile auszuüben, wenn die erfindungsgemäße Spindel in die Spindelmutter des Gewindetriebs eingesetzt wird. Die Federkonstante des elastischen Elements kann hierbei so gewählt sein, dass das Gewindespiel kompensiert wird, aber gleichzeitig Reibungskräfte beim Verstellen geringgehalten werden. Die Federkonstante des elastischen Elements kann also so gewählt werden, dass nur eine sehr geringe Belastung der Gewindeflanken durch Reibung entsteht.

Das elastische Element kann unter Spannung stehen, wenn der erste Spindelteil und der zweite Spindelteil in der Spindelmutter des Gewindetriebs eingesetzt sind. Gemäß der vorliegenden Erfindung wird das elastische Element im Gegensatz zum Stand der Technik nur zur einmaligen Einstellung der Spielfreiheit verwendet. Durch das elastische Element kann die Spielfreiheit zwischen Spindel- und Muttergewinde automatisch eingestellt werden. Nach Herstellen der Spielfreiheit wird die Wirkung des elastischen Elements mittels Fixierung durch das Fixierelement blockiert, sodass das elastische Element keinen Einfluss auf die Verstelldynamik des Gewindetriebs hat.

Durch die Blockierung der Wirkung des elastischen Elements durch Fixieren mittels des Fixierelements ist das dynamische Verhalten des Gewindetriebs unabhängig von den Eigenschaften des elastischen Elements. Somit kann einerseits die Dynamik des Gewindetriebs verbessert werden. Andererseits verändert sich die auf die Gewindeflanken wirkende Belastung auch bei Verstellen des Gewindetriebs oder einer Bewegungsumkehr nicht. Dadurch können gleichbleibende Verschleißkräfte erzielt und ein Verschleiß minimiert werden. Mit anderen Worten ist der Verschleiß des Gewindetriebs unabhängig davon, unter welchen dynamischen Bedingungen der Gewindetrieb verwendet wird. Dadurch kann der Verschleiß minimiert werden. Dies führt insgesamt zu einer weiteren Verbesserung der Einstellbarkeit gegenüber dem Stand der Technik.

Gemäß einer bevorzugten Ausführungsform ist das elastische Element in der Längsaussparung des ersten Spindelteils angeordnet und steht mit dem zweiten Spindelteil in Kontakt. Vorzugsweise ist das elastische Element an einem inneren Ende der Längsaussparung angeordnet und steht mit einem Ende des Steckbolzens des zweiten Spindelteils in Kontakt. Dadurch kann ein kompaktes Design für die Spindel erreicht werden. Gemäß einer weiteren Ausführungsform ist das elastische Element zwischen dem ersten Gewindeteil und dem zweiten Gewindeteil angeordnet und ist vom Steckbolzen des zweiten Spindelteils durchdrungen.

Die Erfindung betrifft ferner einen Gewindetrieb mit einer erfindungsgemäßen Spindel und einer Spindelmutter, wobei der erste Spindelteil und der zweite Spindelteil durch das Fixiermittel in dem eingestellten Abstand zwischen den beiden Spindelteilen zur Kompensation des Gewindespiels fixiert sind.

Vorzugsweise sind der erste Spindelteil und der zweite Spindelteil, z.B. nach automatischer Einstellung mittels des elastischen Elements, gegen ein Gewinde der Spindelmutter so verspannt, dass der erste Gewindeteil auf seiner dem zweiten Gewindeteil abgewandten Seite an dem Gewinde der Spindelmutter anliegt und dass der zweite Gewindeteil auf seiner dem ersten Gewindeteil abgewandten Seite an dem Gewinde der Spindelmutter anliegt. In diesem Fall kann die Spindel ein elastisches Element aufweisen, welches eine Druckkraft auf den ersten Spindelteil und den zweiten Spindelteil ausübt. Alternativ sind der erste Spindelteil und der zweite Spindelteil gegen das Gewinde der Spindelmutter so verspannt, dass der erste Gewindeteil auf seiner dem zweiten Gewindeteil zugewandten Seite an dem Gewinde der Spindelmutter anliegt und dass der zweite Gewindeteil auf seiner dem ersten Gewindeteil zugwandten Seite an dem Gewinde der Spindelmutter anliegt. In diesem Fall kann die Spindel ein elastisches Element aufweisen, welches eine Zugkraft auf den ersten Spindelteil und den zweiten Spindelteil ausübt. Durch das Verspannen kann ein spielfreier Gewindetrieb hergestellt werden.

Die Erfindung betrifft ferner eine Stellvorrichtung zum Verfahren eines beweglichen Elements, welches einen erfindungsgemäßen Gewindetrieb sowie einen Motor umfasst. Die Stellvorrichtung ermöglicht eine exakte motorische Verstellung in die beiden Richtungen einer Koordinatenachse. Das Verfahren des beweglichen Elements kann eine lineare Bewegung des beweglichen Elements sein.

Die Stellvorrichtung kann zum Verfahren von optischen Elementen von Laserbearbeitungsvorrichtungen oder Laserbearbeitungssystemen dienen. Die optischen Elemente können Optiken, beispielsweise Linsen, Linsengruppen, Spiegel, Strahlteiler oder Strahlformungsoptiken, umfassen. Bei der Stellvorrichtung kann es sich beispielsweise um eine kartesische Horizontaljustage eines optischen Elements für Laserbearbeitungsvorrichtungen handeln.

Der Motor, beispielsweise ein Stellmotor, ist dazu eingerichtet, die Spindel relativ zur Spindelmutter zu bewegen. Bei dieser relativen Bewegung kann es sich um eine Drehbewegung handeln, die in eine lineare Verstellbewegung der Spindelmutter und somit des beweglichen Elements umgesetzt wird. Die Spindel oder Spindelmutter kann auch manuell bewegbar sein. Vorzugsweise greift der Motor am ersten Spindelteil an. Dazu kann eine Welle des Motors mit einem Spindelansatz des ersten Spindelteils verbunden sein. Das bewegliche Element, wie z.B. ein optisches Element, kann an der Spindelmutter befestigt sein.

Die erfindungsgemäße Spindel kann in einem Verfahren zum Einstellen eines Spiels eines Gewindetriebs verwendet werden. Das Verfahren kann die folgenden Schritte in dieser Reihenfolge umfassen: Einstellen eines Abstands des ersten Spindelteils und des zweiten Spindelteils in einem Gewinde einer Spindelmutter des Gewindetriebs, um einen Versatz zwischen dem ersten Gewindeteil und dem zweiten Gewindeteil einzustellen, und Fixieren des ersten Spindelteils und des zweiten Spindelteils aneinander mit dem eingestellten Abstand. Das Einstellen des Abstands kann durch das Ausüben einer Zug- oder Druckkraft auf das erste Spindelteil und/oder das zweite Spindelteil erfolgen. Die Zug- oder Druckkraft können in Längsrichtung der Spindel bzw. in Längsrichtung des Gewindes der Spindelmutter wirken. Das Fixieren kann durch das Ausbilden eines Kraftschlusses zwischen dem ersten Spindelteil und dem zweiten Spindelteil erfolgen. Das Verfahren kann als Schritt vor dem Einstellen des Abstands ferner den folgenden Schritt aufweisen: Einführen des ersten Spindelteils und Einführen des zweiten Spindelteils in die Spindelmutter des Gewindetriebs. Das Einführen der beiden Spindelteile in die Spindelmutter kann durch eine Schraubbewegung erfolgen. Die Schraubbewegung umfasst eine Drehbewegung.

Die Erfindung betrifft ebenfalls eine Spindelmutter für einen Gewindetrieb, umfassend: einen ersten Spindelmutterteil mit einem ersten Gewindeteil und einen zweiten Spindelmutterteil mit einem zweiten Gewindeteil, wobei der erste Gewindeteil und der zweite Gewindeteil zusammen ein Gewinde der Spindelmutter bilden, und ein Fixiermittel, wobei der erste Spindelmutterteil und der zweite Spindelmutterteil derart ausgebildet sind, dass ein Abstand zwischen dem ersten Spindelmutterteil und dem zweiten Spindelmutterteil entlang der Drehachse einer Spindel des Gewindetriebs einstellbar ist, um einen Versatz zwischen dem ersten Gewindeteil und dem zweiten Gewindeteil zur Kompensation eines Gewindespiels einzustellen, wobei das Fixiermittel eingerichtet ist, den ersten Spindelmutterteil und den zweiten Spindelmutterteil mit dem eingestellten Abstand aneinander zu fixieren. Mit anderen Worten ist in diesem Fall die Spindelmutter zweiteilig ausgebildet. Die Spindel kann einteilig ausgebildet sein. Die Herstellung der Spielfreiheit erfolgt in diesem Fall analog.

## Kurzbeschreibung der Zeichnungen

Die Erfindung wird im Folgenden anhand von Figuren im Detail beschrieben. Darin ist

Fig. 1　eine Querschnitt-Ansicht einer Spindel gemäß einer Ausführungsform der Erfindung;

Fig. 2　eine Querschnitt-Ansicht einer Spindel und einer Spindelmutter gemäß einer Ausführungsform der Erfindung; und

Fig. 3　ein Ausschnitt der Ansicht von Fig. 2, die ein Gewinde der Spindel und ein Gewinde der Spindelmutter zeigt.

## Detaillierte Beschreibung

Im Folgenden werden, sofern nicht anders vermerkt, für gleiche und gleichwirkende Elemente gleiche Bezugszeichen verwendet.

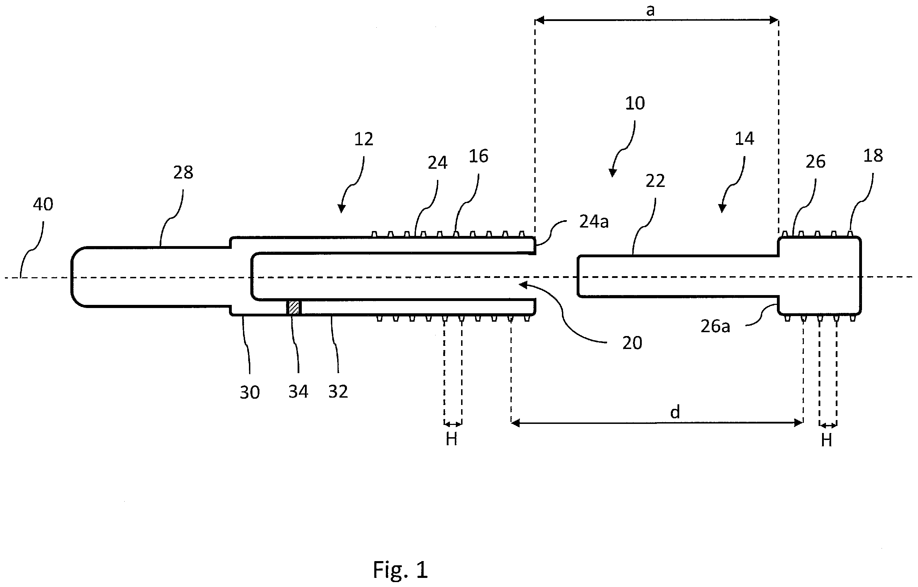

Fig. 1 zeigt eine Spindel gemäß einer Ausführungsform der vorliegenden Erfindung. Die Spindel 10 umfasst einen ersten Spindelteil 12 und einen zweiten Spindelteil 14. Der erste Spindelteil 12 und der zweite Spindelteil 14 weisen vorzugsweise denselben Durchmesser auf.

Der erste Spindelteil 12 weist einen ersten Gewindeteil 16 auf und der zweite Spindelteil 14 weist einen zweiten Gewindeteil 18 auf. Der erste Gewindeteil 16 und der zweite Gewindeteil 18 bilden zusammen ein Gewinde der Spindel 10, das mit einem Gewinde einer Spindelmutter (nicht gezeigt) so zusammenwirkt, dass die Spindel 10 in die Spindelmutter hinein bzw. aus dieser herausgedreht werden kann. Der erste Gewindeteil 16 ist an einem Gewindebereich 24 des ersten Spindelteils 12 angeordnet. Der zweite Gewindeteil 18 ist an einem Gewindebereich 26 des zweiten Spindelteils 14 angeordnet. Der erste Gewindeteil 16 und der zweite Gewindeteil 18 haben dieselbe Steigung oder Gewindeganghöhe H.

Der erste Spindelteil 12 umfasst einen Umfangsbereich 32. Der Umfangsbereich 32 umfasst den Gewindebereich 24 des ersten Spindelteils 12 und kann ferner einen gewindefreien Bereich 30 umfassen. Am gewindefreien Bereich 30 ist kein Gewinde vorhanden.

Der erste Spindelteil 12 weist eine Längsaussparung 20 auf. Die Längsaussparung 20 ist koaxial zur Drehachse 40 oder Längsachse der Spindel 10 ausgebildet. Mit anderen Worten ist die Längsaussparung 20 eine axiale Längsaussparung. Die Längsaussparung ist zylinderförmig ausgebildet, ist jedoch nicht auf diese Form beschränkt.

Entsprechend weist der zweite Spindelteil 14 einen Steckbolzen 22 auf. Der Steckbolzen 22 ist koaxial zur Drehachse oder Längsachse der Spindel 10 ausgebildet. Der Steckbolzen 22 ist zylinderförmig ausgebildet, ist jedoch nicht auf diese Form beschränkt.

Die Längsaussparung 20 ist dazu ausgebildet, den Steckbolzen 22 aufzunehmen. Umgekehrt ist der Steckbolzen 22 dazu ausgebildet, in die Längsaussparung 20 eingeführt oder eingesetzt zu werden. Die Längsaussparung 20 und der Steckbolzen 22 dienen gemeinsam zur Führung des ersten Spindelteils 12 und des zweiten Spindelteils 14 beim Einstellen eines Abstands zwischen den beiden Gewindeteilen 16 und 18.

Der Steckbolzen 22 und die Längsaussparung 20 sind derart ausgebildet, dass der Steckbolzen 22 in der Längsaussparung 20 frei und kontinuierlich verschiebbar ist, während er in die Längsaussparung 20 eingesetzt ist.

Zwischen dem ersten Spindelteil 12 und dem zweiten Spindelteil 14 ist ein Abstand a vorhanden. Der Abstand a kann als ein Abstand zwischen der Stirnfläche 24a des Gewindebereichs 24 des ersten Spindelteils 12 und der dieser Stirnfläche 24a gegenüberliegenden Stirnfläche 26a des Gewindebereichs 26 des zweiten Spindelteils 14 definiert werden. Der Abstand d zwischen einer beliebigen Windung des ersten Gewindeteils 16 und einer beliebigen Windung des zweiten Gewindeteils 18 kann mithilfe der folgenden Gleichung dargestellt werden:

$$d = N \cdot H + v \cdot H$$

Dabei ist H die Gewindeganghöhe, die bei beiden Gewindeteilen gleich ist. N ist eine natürliche Zahl. v ist eine reelle Zahl mit $0 \leq v < 1$. v kann auch als Versatz zwischen dem Gewindegang des ersten Gewindeteils 16 und dem Gewindegang des zweiten Gewindeteils 18 bezeichnet werden (im Folgenden auch "Versatz zwischen dem ersten Gewindeteil und dem zweiten Gewindeteil" genannt). Da die jeweiligen Gewindeteile einteilig mit den jeweiligen Gewindebereichen des ersten Spindelteils 12 und des zweiten Spindelteils 14 ausgebildet sind, ist d eine lineare Funktion des Abstands a. Demnach ist der Versatz v eine lineare Funktion von a für einen gegebenen Wert von N. Der Versatz kann auch als die Strecke definiert werden, um die der Gewindegang des einen Gewindeteils bezüglich eines gedanklich parallel zur Drehachse fortgeführten Gewindegangs des anderen Gewindeteils verschoben ist.

Der erste Spindelteil 12 und der zweite Spindelteil 14 sind also derart ausgebildet, dass der Abstand a zwischen dem ersten Spindelteil 12 und dem zweiten Spindelteil 14 entlang der Drehachse 40 der Spindel 10 frei oder kontinuierlich, d.h. beliebig, einstellbar ist, d.h. eingestellt werden kann. Durch Einstellen dieses Abstands a ist auch der Versatz v zwischen dem ersten Gewindeteil 16 und dem zweiten Gewindeteil 18 zur Kompensation eines Gewindespiels einstellbar.

Der erste Spindelteil 12 weist an dem Gewindebereich 24 gegenüberliegenden Ende einen Spindelansatz 28 zur Kopplung mit einer Welle eines Motors (beides nicht gezeigt) auf. Der Motor dient zum Antrieb des Gewindetriebs.

Der erste Spindelteil 12 weist an einem Umfangsbereich 32 ein Loch 34 auf. Das Loch 34 durchdringt den Umfangsbereich 32 des ersten Spindelteils 12 in radialer Richtung hin zur Längsaussparung 20. Das Loch 34 ist also am Umfangsbereich 32 ausgebildet, der an die Längsaussparung 20 angrenzt. Das Loch 34 ist vorzugsweise in dem gewindefreien Bereich 30 des ersten Spindelteils 12 angeordnet.

Das Loch 34 dient zur Aufnahme eines Fixiermittels (nicht gezeigt).

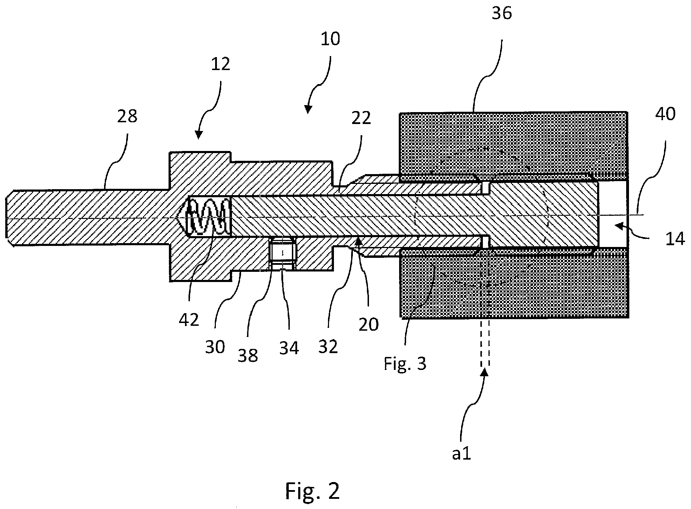

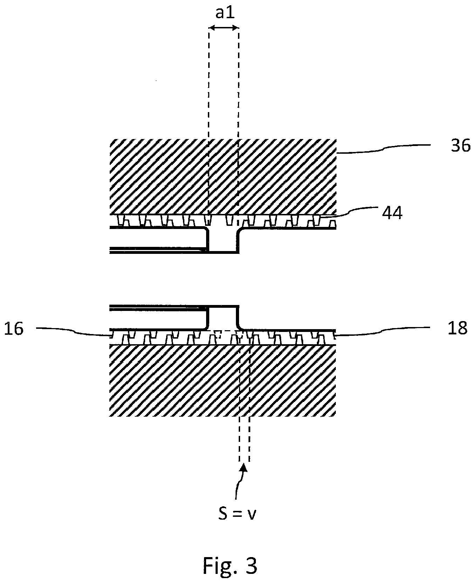

Fig. 2 ist eine Querschnitts-Ansicht einer Spindel 10 gemäß einer Ausführungsform der vorliegenden Erfindung sowie einer Spindelmutter 36, in die die Spindel 10 eingesetzt ist. Zusammen bilden die Spindel 10 und die Spindelmutter 36 einen Gewindetrieb. Fig. 3 zeigt einen Ausschnitt von Fig. 2 und zeigt das Gewinde 44 der Spindelmutter 36 sowie den ersten Gewindeteil 16 des ersten Spindelteils 12 und den Gewindeteil 18 des zweiten Spindelteils 14. Figuren 2 und 3 zeigen einen Zustand, in dem die Spielfreiheit des Gewindetriebs hergestellt bzw. ein Gewindespiel kompensiert ist, das zwischen dem Gewinde 44 der Spindelmutter 36 und einem Gewinde der Spindel 10 mit konstanter Ganghöhe H bestehen würde.

Wie in Fig. 2 gezeigt ist die Spindel 10 in der Spindelmutter 36 eingesetzt. Mit anderen Worten sind sowohl der erste Spindelteil 12 als auch der zweite Spindelteil 14 in der Spindelmutter 36 eingesetzt.

Die Spindelmutter 36 ist einteilig ausgebildet. Sie weist genau ein durchgängiges Gewinde 44 mit konstanter Ganghöhe H (siehe Fig. 3) auf. Das Gewinde 44 der Spindelmutter 36 wirkt mit dem ersten Gewindeteil 16 und dem zweiten Gewindeteil 18 zusammen.

Die Spindel 10 weist ferner ein Fixiermittel 38 auf. Wie in Fig. 2 gezeigt ist das Fixiermittel 38 im Umfangsbereich 32 des ersten Spindelteils 12 angeordnet, der an die Längsaussparung 20 bzw. an den darin eingesetzten zweiten Spindelteil 14 angrenzt. Genauer gesagt grenzt der Umfangsbereich 32 an den in die Längsaussparung 20 eingesetzten Steckbolzen 22 des zweiten Spindelteils 14 an. Das Loch 34 ist in dieser Ausführungsform in dem gewindefreien Bereich 30 des ersten Spindelteils 12 angeordnet.

Das Fixiermittel 38 ist in das Loch 34 eingesetzt und steht in Kontakt mit dem eingesetzten zweiten Spindelteil 14, genauer gesagt, mit dem Steckbolzen 22 des zweiten Spindelteils 14. Das Fixiermittel 38 ist in dieser Ausführungsform als Schraube ausgebildet. Das Loch 34 weist hierfür ein Innengewinde auf, welches dem Außengewinde der Schraube entspricht und mit diesem zusammenwirkt, sodass das Fixierelement 38 in das Loch 34 hinein- und herausgeschraubt werden kann.

Wie in Fig. 2 gezeigt übt das Fixiermittel 38 eine Klemmkraft auf das zweite Spindelteil 14 aus, welche das zweite Spindelteil 14 gegen das erste Spindelteil 12 drückt und dadurch eine kraftschlüssige Verbindung herstellt.

Der erste Spindelteil 12 und der zweite Spindelteil 14 sind also durch das Fixiermittel 38 in einem eingestellten Abstand a1 aneinander fixiert oder miteinander verbunden. Der erste Spindelteil 12 und der zweite Spindelteil 14 können sich in diesem Zustand nicht relativ zueinander bewegen. Mit anderen Worten, wenn ein Motor über den Spindelansatz 28 den ersten Spindelteil 12 bewegt, wird gleichzeitig der zweite Spindelteil 14 bewegt, ohne dass eine Relativbewegung der beiden Spindelteile zueinander stattfindet.

Die Spindel 10 weist ferner ein elastisches Element 42 auf. Das elastische Element 42 ist zwischen dem ersten Spindelteil 12 und dem zweiten Spindelteil 14 angeordnet. Das elastische Element 42 ist in der Längsaussparung 20 des ersten Spindelteils 12 angeordnet und steht gleichzeitig mit dem eingesetzten zweiten Spindelteil 14, d.h. mit dem eingesetzten Steckbolzen 22 des zweiten Spindelteils in Kontakt. Alternativ kann das elastische Element 42 um den Steckbolzen 22 herum und zwischen den Stirnflächen 24a und 26a der Gewindebereiche 24 und 26 angeordnet sein. Das elastische Element 42 ist dazu ausgebildet, eine Federkraft auf den ersten Spindelteil und den zweiten Spindelteil entlang der Drehachse 40 der Spindel auszuüben.

Das elastische Element kann als Spiralfeder ausgebildet sein. In dem in Fig. 2 gezeigten Zustand ist das elastische Element 42 gespannt, d.h. es ist gestaucht und übt eine Druckkraft auf den ersten Spindelteil 12 und den zweiten Spindelteil 14 aus. Allerdings ist das zweite Spindelteil 14 am ersten Spindelteil 12 durch das Fixiermittel 38 befestigt bzw. fixiert.

Fig. 3 ist ein Ausschnitt aus der Ansicht von Fig. 2 und zeigt das Gewinde 44 der Spindelmutter 36, und das Gewinde der Spindel 10, d.h. den ersten Gewindeteil 16 und den zweiten Gewindeteil 18.

Ohne das Fixiermittel 38 werden der erste Spindelteil 12 und der zweite Spindelteil 14 beim Einschrauben der Spindel 10 in die Spindelmutter 36 durch das elastische Element 42 gegen das Gewinde 44 der Spindelmutter 36 verspannt. Das bedeutet, der erste Gewindeteil 16 liegt auf seiner dem zweiten Gewindeteil 18 abgewandten Seite an dem Gewinde 44 der Spindelmutter 36 an und der zweite Gewindeteil 18 auf seiner dem ersten Gewindeteil 16 abgewandten Seite an dem Gewinde 44 der Spindelmutter 36 an. In diesem durch das elastische Element 42 eingestellten Abstand a1 werden die beiden Spindelteile 12 und 14 durch das Fixiermittel 38 festgestellt, um so den Versatz v zur Kompensation des Gewindespiels S einzustellen. Mit anderen Worten entspricht der Versatz v dem Gewindespiel oder ist in etwa so groß wie das Gewindespiel S.

Mittels des elastischen Elements 42 stellt sich also der Abstand a1 automatisch ein, bei dem das Spiel S des Gewindetriebs durch den Versatz v kompensiert ist. D.h. in diesem Zustand ist der Gewindetrieb spielfrei. Mit anderen Worten ist die Spielfreiheit des Gewindetriebs hergestellt bzw. eingestellt. Wie in Fig. 2 und Fig.

3 gezeigt ist der erste Spindelteil 12 und der zweite Spindelteil 14 durch das Fixiermittel 38 in dem eingestellten Abstand a1 fixiert.

Dadurch bleibt die Spielfreiheit des Gewindetriebs auch beim Verstellen des Gewindetriebs aufrechterhalten. Die Wirkung des elastischen Elements 42 ist blockiert. Das elastische Element 42 hat demnach keine Auswirkungen auf die Dynamikeigenschaften des Gewindetriebs. Dadurch sind spielfreie Richtungswechsel möglich.

## Bezugszeichenliste

| | |
|---|---|
| 10 | Spindel |
| 12 | erster Spindelteil |
| 14 | zweiter Spindelteil |
| 16 | erster Gewindeteil |
| 18 | zweiter Gewindeteil |
| 20 | Längsaussparung |
| 22 | Steckbolzen |
| 24 | Gewindebereich des ersten Spindelteils |
| 24a | Stirnfläche des Gewindebereichs |
| 26 | Gewindebereich des zweiten Spindelteils |
| 26a | Stirnfläche des Gewindebereichs |
| 28 | Spindelansatz |
| 30 | gewindefreier Bereich des ersten Spindelteils |
| 32 | Umfangsbereich des ersten Spindelteils |
| 34 | Loch im Umfangsbereich |
| 36 | Spindelmutter |
| 38 | Fixiermittel |
| 40 | Drehachse |
| 42 | elastisches Element |
| 44 | Gewinde der Spindelmutter |

## Patentansprüche

1. Spindel (10) für einen Gewindetrieb, umfassend:

   - einen ersten Spindelteil (12) mit einem ersten Gewindeteil (16) und einen zweiten Spindelteil (14) mit einem zweiten Gewindeteil (18), wobei der erste Gewindeteil (16) und der zweite Gewindeteil (18) zusammen ein Gewinde der Spindel (10) bilden, und
   - ein Fixiermittel (38),
   wobei der erste Spindelteil (12) und der zweite Spindelteil (14) derart ausgebildet sind, dass ein Abstand zwischen dem ersten Spindelteil (12) und dem zweiten Spindelteil (14) entlang der Drehachse (40) der Spindel (10) einstellbar ist, um einen Versatz zwischen dem ersten Gewindeteil (14) und dem zweiten Gewindeteil (16) zur Kompensation eines Gewindespiels einzustellen,
   wobei das Fixiermittel (38) eingerichtet ist, den ersten Spindelteil (12) und den zweiten Spindelteil (14) in dem eingestellten Abstand aneinander zu fixieren.

2.  Spindel (10) gemäß Anspruch 1, wobei das Fixiermittel (38) am ersten Spindelteil (12) angeordnet ist und eine Klemmkraft auf den zweiten Spindelteil (14) ausübt.

3.  Spindel (10) gemäß einem der vorstehenden Ansprüche, wobei der zweite Spindelteil (14) in den ersten Spindelteil (12) teilweise eingesetzt ist.

4.  Spindel (10) gemäß Anspruch 3, wobei der erste Spindelteil (12) eine Längsaussparung (20) und der zweite Spindelteil (14) einen Steckbolzen (22) aufweist, wobei der Steckbolzen (22) in der Längsaussparung (20) eingesetzt ist und darin frei verschiebbar ist.

5.  Spindel gemäß Anspruch 4, wobei das Fixiermittel (38) an einem Umfangsbereich (32) des ersten Spindelteils (12) angeordnet ist, der die Längsaussparung (20) umgibt.

6.  Spindel (10) gemäß einem der Ansprüche 3 bis 5, wobei ein Loch (34) im Umfangsbereich (32) des ersten Spindelteils (12) ausgebildet ist, in welches das Fixiermittel (38) einsetzbar ist, um in Kontakt mit dem eingesetzten zweiten Spindelteil (14) zu treten.

7.  Spindel (10) gemäß Anspruch 4 oder 5, wobei das Fixiermittel (38) als Schraube ausgebildet ist und wobei das Loch (34) ein Innengewinde aufweist.

8.  Spindel (10) gemäß einem der vorstehenden Ansprüche, ferner umfassend:

    - ein elastisches Element (42), wobei das elastische Element (42) zwischen dem ersten Spindelteil (12) und dem zweiten Spindelteil (14) angeordnet ist, um eine Federkraft auf den ersten Spindelteil (12) und den zweiten Spindelteil (14) entlang der Drehachse (40) der Spindel (10) auszuüben.

9.  Spindel (10) gemäß Anspruch 8, wobei das elastische Element (42) in der Längsaussparung (20) des ersten Spindelteils (12) angeordnet ist und mit dem eingesetzten dem zweiten Spindelteil (16) in Kontakt steht.

10. Spindel (10) gemäß Anspruch 8, wobei das elastische Element (42) außerhalb der Längsaussparung (20) des ersten Spindelteils (12) zwischen dem ersten Gewindeteil (12) und dem zweiten Gewindeteil (14) angeordnet und vom Steckbolzen (22) durchdrungen ist.

11. Gewindetrieb umfassend eine Spindelmutter (36) und eine Spindel (10) gemäß einem der vorstehenden Ansprüche,
    wobei der erste Spindelteil (12) und der zweite Spindelteil (14) durch das Fixiermittel (38) in einem eingestellten Abstand fixiert sind.

12. Gewindetrieb gemäß Anspruch 11, wobei der eingestellte Abstand so gewählt ist, dass der erste Spindelteil (12) und der zweite Spindelteil (14) gegen ein Gewinde (44) der Spindelmutter (36) verspannt sind, und/oder dass der erste Gewindeteil (16) auf seiner dem zweiten Gewindeteil (18) abgewandten Seite an dem Gewinde (44) der Spindelmutter (36) anliegt und der zweite Gewindeteil (18) auf seiner dem ersten Gewindeteil (16) abgewandten Seite an dem Gewinde (44) der Spindelmutter (36) anliegt.

13. Stellvorrichtung zum Verfahren eines beweglichen Teils, insbesondere eines optischen Elements einer Laserbearbeitungsvorrichtung, umfassend einen Motor und einen Gewindetrieb gemäß Anspruch 11 oder 12.

14. Stellvorrichtung gemäß Anspruch 13, wobei eine Welle des Motors mit dem ersten oder zweiten Spindelteil (12, 14) gekoppelt ist.

Fig. 1

Fig. 2

Fig. 3

**EUROPÄISCHER RECHERCHENBERICHT**

Nummer der Anmeldung

EP 20 16 7964

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 3 460 292 A1 (THYSSENKRUPP HOME SOLUTIONS S R L [IT]; THYSSENKRUPP AG [DE]) 27. März 2019 (2019-03-27) * das ganze Dokument * ----- | 1-14 | INV. F16H25/20 ADD. F16H25/24 |
| A | DE 10 2017 209684 A1 (ZAHNRADFABRIK FRIEDRICHSHAFEN [DE]) 13. Dezember 2018 (2018-12-13) * das ganze Dokument * ----- | 1,11,13 | |

**RECHERCHIERTE SACHGEBIETE (IPC)**

F16H

Der vorliegende Recherchenbericht wurde für alle Patentansprüche erstellt

| Recherchenort | Abschlußdatum der Recherche | Prüfer |
|---|---|---|
| München | 23. September 2020 | Masset, Candie |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

........................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 16 7964

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-09-2020

| Im Recherchenbericht angeführtes Patentdokument | Datum der Veröffentlichung | Mitglied(er) der Patentfamilie | Datum der Veröffentlichung |
|---|---|---|---|
| EP 3460292 A1 | 27-03-2019 | CN 210418855 U<br>EP 3460292 A1 | 28-04-2020<br>27-03-2019 |
| DE 102017209684 A1 | 13-12-2018 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1057960 B1

- DE 10208064129 B3